# EUROPEAN PATENT APPLICATION

(11) **EP 3 605 413 A1**
(43) Date of publication of application: **05.02.2020**
(21) Application number: 18186972.8
(22) Date of filing: 02.08.2018
(51) Int. Cl.: G06Q 10/00

(54) **METHOD FOR AUTOMATICALLY PERFORMING SERVICES FOR A USER, AUTONOMOUS MOBILE USER DEVICE AND BACKEND RECOMMENDER SYSTEM FOR THE USE IN THE METHOD**

(71) Applicant: VOLKSWAGEN AKTIENGESELLSCHAFT, 38440 Wolfsburg (DE)
(72) Inventor: Hehn, Dr. Thorsten, 85055 Etting (DE); El Assaad, Ahmad, 38440 Wolfsburg (DE)

(57) **Abstract**

The proposal concerns a method for automatically performing services for a user. Such method comprises the steps of receiving in an autonomous mobile user device (10) of a user an instruction to perform a specified service. Such instruction is received from a backend recommender system (410). The autonomous mobile user device (10) carries out the specified service without explicit user consent, and reports the execution of said specified service to the user. Once having received feedback from the user to the execution of the service, the autonomous mobile user device (10) reports said user feedback to the backend recommender system (410). The backend recommender system (410) runs a machine learning algorithm to improve the recommendation accuracy of the backend recommendation engine (412) in said backend recommender system (410).

## Description

The disclosure relates to a method for automatically performing services for a user. The disclosure further relates to an autonomous mobile user device and a backend recommender system for the use in the method.

For the scenario of vehicles equipped with wireless communication modules that provide connectivity to public communication networks offers the opportunity to implement a wide range of applications people would never think of having a consideration of classical vehicle in mind.

Currently the following mobile communication technologies are applicable for bringing connectivity to a vehicle: 3GPP-based UMTS, HSPA, LTE, and the upcoming 5G standards.

Currently, a car is either separate from its user (e.g. when parking) or closely coupled to the user (while driving): in the latter case, the car carries out all instructions given by the user.

From US 2015/0348335 A1 a technology is described for performing services on an autonomous vehicle. The document describes different embodiments, among them that the autonomous vehicle may detect on its own that a service is to be performed on the autonomous vehicle. The autonomous vehicle then selects a service center to perform the service on the autonomous vehicle based on price, customer reviews, service center capabilities, etc. The autonomous vehicle may provide commands to drive the autonomous vehicle to the service center where such service will be performed. The typical type of service in this scenario is a maintenance type service.

The same scenario is concerned in US 2017/02783 12 A1 from which a system and method for automatic maintenance of an autonomous vehicle is known.

What is needed is a connectivity-based approach to make mobile user devices more personalized and self-organized. These and other objects are solved with a method for automatically performing services for a user, a corresponding mobile user device and backend recommender system for the use in the method according to the independent claims 1, 8, and 12.

The dependent claims contain advantageous developments and improvements to the method and devices (user device and backend recommender system) according to the disclosure.

With autonomous driving or moving and ubiquitous connectivity, some mobile user devices such as vehicles or robots or drones will be mobile on their own and have the capability to be in constant contact with their users / owners. Thus a solution to the above mentioned problem is based on an approach, which allows for the mobile user device to become an independent individual that carries out actions that its user likes. Key elements use connectivity and machine learning.

For this purpose, it is advantageous to give the mobile user device a certain level of autonomy and let it perform actions that the user will be proud of. This can result to a very strong emotional attachment between the mobile user device and the user, especially if it leads to benefits for the user. The technical key question is: "How should it be made possible that the mobile user device surprises the user with its autonomous actions, and at the same time asserts with a very high probability that the user will be fond of the mobile user devices's actions?"

The solution to this problem concerns a method for automatically performing services for a user, comprising the steps of receiving in a mobile user device an instruction to perform a specified service from a backend recommender system, where said mobile user device carries out the specified service without explicit user consent. When the service has been performed, what happens then is reporting the execution of said specified service to the user and receiving feedback from the user regarding the execution of the service. This may be in the form of a typical "like" and "dislike" feedback. Next, a step of reporting said user feedback to the backend recommender system is performed. Finally, the method includes a step of applying a machine learning algorithm at the backend recommender system to improve the recommendation accuracy. With this solution, it is possible to enhance the value of the mobile device for the user such that it is possible that it becomes an independent individual that carries out actions that its user likes.

It is a further advantageous embodiment of such method, that the backend recommender system is trained beforehand in a first phase, in which the user instructions for performing a service are recorded at the backend recommender system after which a step of user classification is performed in which the user is being classified to be affine to a certain type of service. This training phase may start from scratch without any knowledge about the user preferences. This way it is avoided that the user needs to enter a lot of information about his preferences in a configuration phase.

In a further embodiment the backend recommender system is trained beforehand in a second phase, in which the backend recommender system generates instructions for performing a service based on the classification of the user from the first phase, asks for approval by said user and wherein the user's reaction to the question will be used in a further step of user classification refinement. This way recommendations to the user about certain services the user may like to be executed can be generated, the feedback of the user to them will be used to constantly improve the recommendation accuracy.

The improvement of the recommendation accuracy may involve the classification of the user to be affine to a certain type of service without explicit user consent in one further embodiment.

In another embodiment, the user classification is recorded in a user profile in the backend recommender system. This is a way of efficiently recording the user preferences in the backend recommender system. Also with user profiling, the calculation expenditure in the recommendation engine of the backend recommender system is subjectively reduced.

Examples of certain types of services are a maintenance service, a cleaning service, a refreshment service or a shopping service.

As explained above in an advantageous embodiment a three-phased approach for user profiling is coupled with a backend recommender system. This opens a complete new range of utility for autonomous vehicles.
- Phase 1: The vehicle does not initiate any actions by itself. However, it is open to commands by its user, e.g. "Pick me up at location X and time t", "Acquire object o and deliver it to me at location X and time t". These actions are sent to the backend recommender system and the classification function of the recommender system uses the data to classify the car's user. This is done separately for each user in a user profile, but the backend recommender system is still central, i.e. there exists only one instance handling all this data.
- Phase 2: Once the classification of the user has become statistically sound, Phase 2 is entered. Given the user's actions in Phase 1, and given all other users' actions, the backend recommender system's prediction engine can now predict how likely it is that the user will accept any new, autonomous actions by the vehicle. Actions with a high likelihood to be accepted can be suggested by the vehicle to the user. Examples include "Bring refreshments if the user needs to work overtime in the office", "Schedule tire change earlier to avoid risk of snow on summer tires", "Perform car wash when there is a special low-price deal in the vicinity". The user can either actively react, and thus allow the activity, or stay passive, which means that he implicitly forbids the activity. This information on the user decision is sent back to the backend recommender system to improve the classification of the user.
- Phase 3: In Phase 3, the vehicle performs actions without the user's prior permission. To continue the example above, the car vehicle proactively use the opportunity of the low-cost car wash service and only inform the user afterwards.

For an autonomous mobile user device it is advantageous that it is adapted for the use in the above mentioned method.

In another embodiment an autonomous mobile user device is a vehicle, which is equipped with an on-board connectivity unit providing communication capability to said vehicle. Preferably the vehicle is further equipped with a service management module supporting the automatically performing of a service for the user of said vehicle, wherein said service management module in phase one of said training phase forwards a request to perform a service specified from the user of said vehicle to said on-board connectivity unit, which then transmits a corresponding service request feed forward message towards the backend recommender system. The training of the recommender system is important for recommendation accuracy. It helps to assure that the recommender system comes up with service recommendations the user likes.

In an enhanced embodiment it is advantageous that said service management module via said on-board connectivity unit in phase two of the training phase receives one or more suggested service request messages from the backend recommender system, informs the user about the requested service, receives a feedback from the user and generates a first type of a user feedback reporting message, which is forwarded to said on-board connectivity unit, which then transmits said user feedback reporting message towards the backend recommender system. The second phase of training of the recommender system is important for enhancing the recommendation accuracy.

Moreover, it is advantageous that said service module via said on-board connectivity unit in phase three of the training phase receives one or more messages containing a suggested service request from the backend recommender system, informs the user about the service once it has been performed, receives a feedback from the user and generates a second type of a user feedback reporting message, which is forwarded to said on-board connectivity unit, which then transmits said user feedback reporting message towards the backend recommender system. The third phase of training of the recommender system is important for further enhancing the recommendation accuracy.

For a backend recommender system, it is advantageous that it is adapted for the use in the above mentioned method according to the proposal.

One form of adaptation comprises communication means for receiving a plurality of service request feed forward messages in said first training phase and comprising a service recommendation engine which runs a machine learning algorithm for creating a user profile in said first training phase based on said plurality of service request feed forward messages.

Another advantageous embodiment concerns the adaptation of the service recommendation engine to generate one or more suggested service request messages once the user profile has been trained in the first phase, to include means for transmitting the service request message towards the mobile user device, to include further means to receive back one or more user feedback reporting message and wherein said recommendation engine runs said a machine learning algorithm again to refine the user profile in said second phase based on the received one or more user feedback reporting message.

Exemplary embodiments of the present disclosure are shown in the drawing and are explained in greater detail in the following description.

In the drawings:
- Fig. 1: illustrates the principle architecture of an autonomous service execution system with user device and backend recommendation system;
- Fig. 2: a typical cockpit of a car;
- Fig. 3: a block diagram of an infotainment system of a vehicle;
- Fig. 4: a block diagram of a backend recommendation system comprising machine learning algorithms for three different phases of training;
- Fig. 5: shows the message exchange between user device and backend recommendation system for the first training phase;
- Fig. 6: shows the message exchange between user device and backend recommendation system for the second training phase;
- Fig. 7: shows the message exchange between user device and backend recommendation system for the third training phase; and

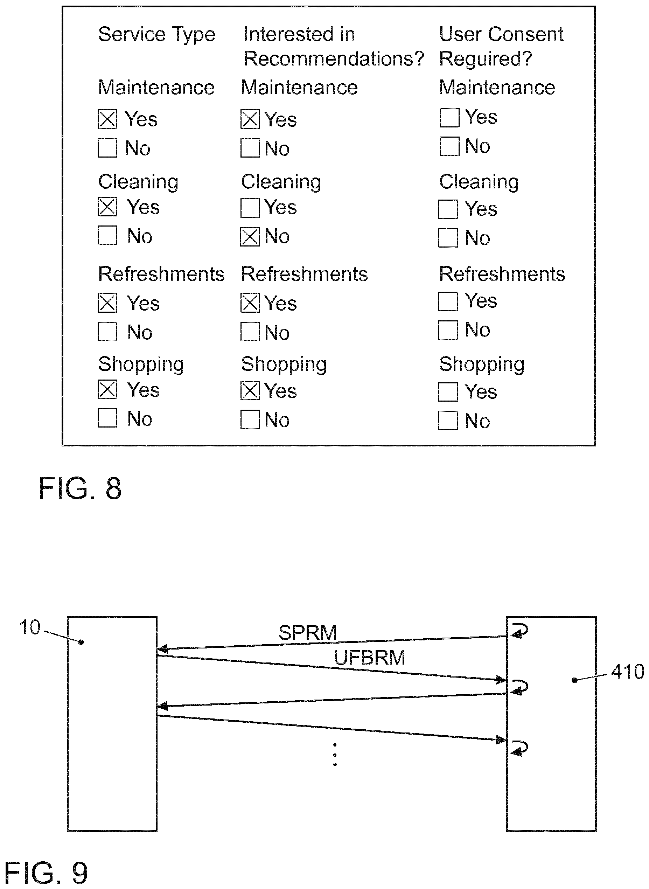

- Fig. 8: shows an example of a user profile after executing the first training phase;
- Fig. 9: shows an example of a user profile after executing the second training phase; and

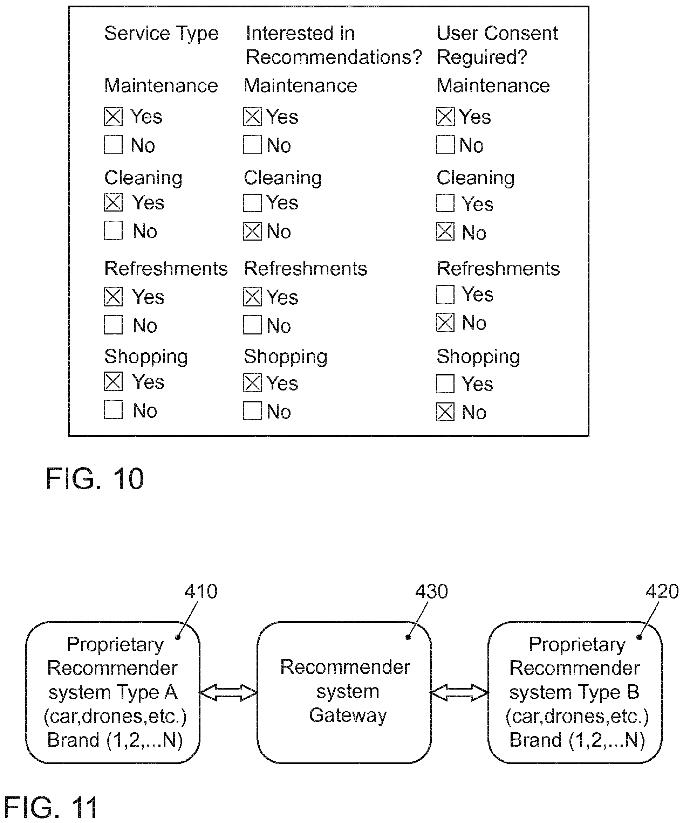

- Fig. 10: shows an example of a user profile after executing the third training phase;
- Fig. 11: shows the concept of a hybrid network of social machines which exchange user profiling information; and
- Fig. 12: shows the concept of a network of social machines connected with a human social networks which exchange user profiling information.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided by the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

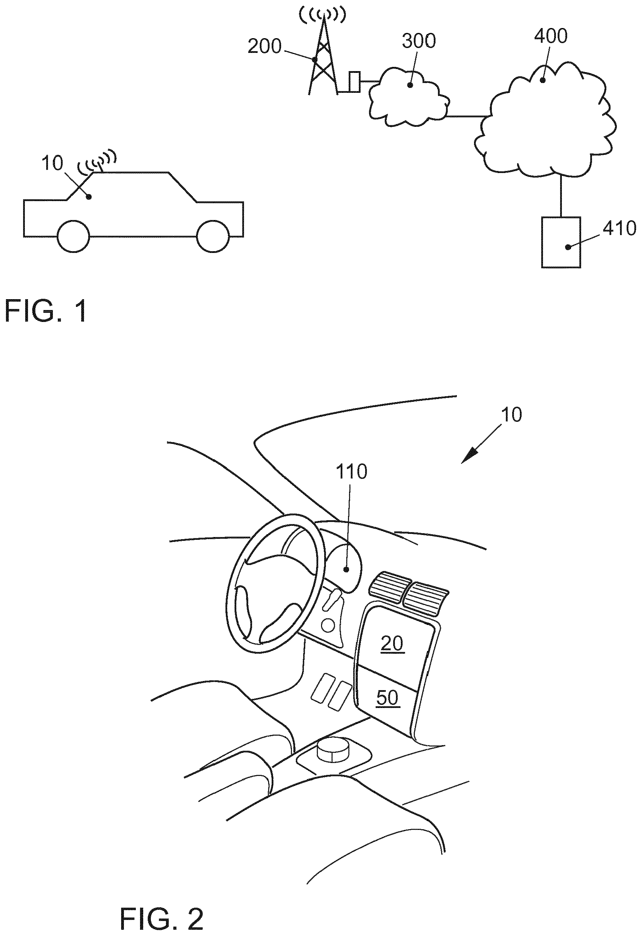

Fig. 1 shows the system architecture for the proposal. Reference number 10 denotes a user device. The depicted user device is exemplified as a vehicle and more in particular it is a car. In other examples it may be differently exemplified, e.g. a smart phone, a smart watch, a tablet computer, notebook or laptop computer or the like. Shown is a passenger car. If exemplified with a vehicle, it may be any type of a vehicle. Examples of other types of vehicles are: buses, motorcycles, commercial vehicles, in particular trucks, agricultural machinery, construction machinery, rail vehicles, etc. The use of the invention would be generally in land vehicles, rail vehicles, watercrafts and aircrafts possible. The vehicle 10 is equipped with an on-board connectivity module including corresponding antenna such that the vehicle 10 can participate in any form of a mobile communication service. Fig. 1 illustrates that vehicle 10 may transmit and receive signals to and from a base station 200 of a mobile communication service provider.

Such base station 200 may be an eNodeB base station of an LTE (Long Term Evolution) mobile communication service provider. The base station 200 and the corresponding equipment is part of a mobile communication network with a plurality of network cells where each cell is served by one base station 200.

The base station 200 in Fig. 1 is positioned close to a main road on which the vehicle 10 is driving. Of course, other vehicles may also drive on the road. In the terminology of LTE, a mobile terminal corresponds to a user equipment UE, which allows a user to access network services, connecting to the UTRAN or Evolved-UTRAN via the radio interface. Typically, such user equipment corresponds to a smart phone. Of course, mobile terminals are also used in the vehicles 10. The cars 10 are equipped with said on-board connectivity module OCU. This OCU corresponds to an LTE communication module with which the vehicle 10 can receive mobile data in downstream direction and can send such data in upstream direction.

More generally, the Evolved UMTS Terrestrial Radio Acess Network E-UTRAN of LTE consists of a plurality of eNodeBs, providing the E-UTRA user plane (PDCP/RLC/MAC/PHY) and control plane (RRC) protocol terminations towards the UE. The eNodeBs are interconnected with each other by means of the so-called X2 interface. The eNodeBs are also connected by means of the so-called S1 interface to the EPC (Evolved Packet Core) 300, more specifically to the MME (Mobility Management Entity) by means of the S1-MME and to the Serving Gateway (S-GW) by means of the S1-U interface.

From this general architecture Fig. 1 shows that eNodeB 200 is connected to the EPC 300 via the S1 interface and that EPC 300 is connected to the Internet 400. Finally, the backend recommender system 410 to which the vehicle 10 sends messages and receives messages from is also connected to the Internet 400. The S1 interface may be reduced to practice with wireless communication technology such as with the help of microwave radio communication by means of directional antennas or wired communication technology based on fiber cables. For the ease of implementation, it is considered that all components have assigned an Internet address, typically in the form of an IPv6 address, such that the packets transporting messages between the components can be routed correspondingly.

The various interfaces of the LTE network architecture are standardized. It is particularly referred to the various LTE specifications, which are publicly available for the sake of sufficiently disclosing further implementation details.

Fig. 2 depicts a typical cockpit of a vehicle 10 exemplified by a car. Depicted in Fig. 2 is a display unit 20 of an infotainment system. It is a touch screen 20, which is mounted in the center console. The touch screen 20 serves in particular for the operation of functions of the vehicle 10. For example, a radio, a navigation system, a playback of stored pieces of music and / or air conditioning, other electronic devices or other comfort functions or applications of the vehicle 10 can be controlled. In summary, this is often named an "infotainment system". An infotainment system referred to in motor vehicles, especially cars, corresponds to the merger of car radio, navigation system, speakerphone, driver assistance systems and other functions in a central control unit. The term "infotainment" is a boxword composed of the words information and entertainment (entertainment). To operate the infotainment system mainly the touch-sensitive screen 20 ("touch screen") is used, this screen 20 can be well viewed and operated in particular by a driver of the vehicle 10, but also by a passenger of the vehicle 10. In addition, below the screen 20, mechanical operating elements, for example keys, rotary encoders or combinations thereof, such as, for example, a rotary pushbutton, can be arranged in an input unit 50. Typically, a steering wheel control of parts of the infotainment system is possible. For this, the vehicles are equipped with a so-called multifunction steering wheel operation element. This unit is not shown separately, but is considered part of the input unit 50.

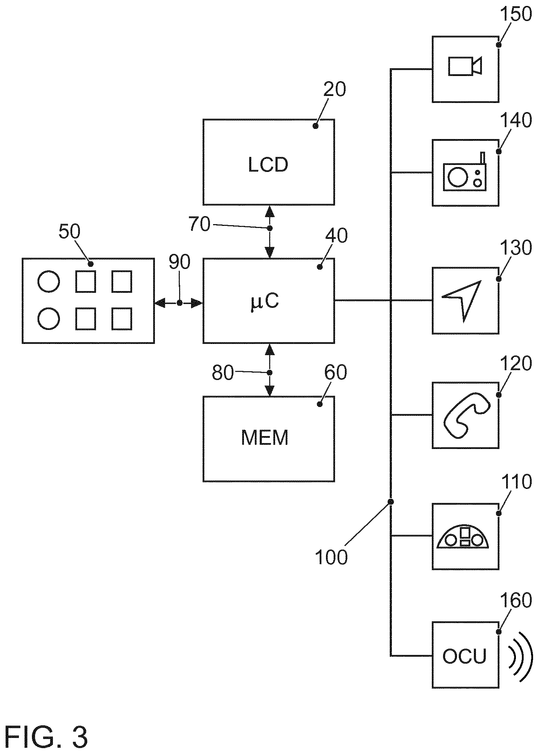

Fig. 3 shows schematically a block diagram of the vehicle's 10 infotainment system. The infotainment system comprises: the touch-sensitive display unit 20, a computing device 40, an input unit 50, and a memory 60. The display unit 20 includes both a display area for displaying variable graphical information and an operator interface (touch-sensitive layer) arranged above the display area) for inputting commands by a user.

The touch screen 20 is connected to the computing device 40 via a data line 70. The data line 70 can be designed according to the LVDS standard, corresponding to Low Voltage Differential Signaling. Via the data line 70, the touch screen 20 receives control data for driving the display surface of the touch screen 20 from the computing device 40. Control data of the input commands from the touch screen 20 are also transmitted to the computing device 40 via the data line 70. Reference numeral 50 denotes the input unit. It is associated with the already mentioned control elements such as buttons, knobs, sliders or rotary pushbuttons, with the help of which the operator can make inputs via the menu. Input is generally understood as selecting a selected menu option, as well as changing a parameter, turning a function on and off, entering text and so on.

The memory device 60 is connected to the computing device 40 via a further data line 80. In the memory 60, a pictogram directory and / or symbol directory is deposited with the pictograms and / or symbols for possible overlays of additional information.

The other parts of the infotainment system such as camera 150, radio 140, navigation device 130, telephone 120 and instrument cluster 110 are connected via the data bus 100 with the device for operating the infotainment system. As data bus 100 is the high-speed variant of the CAN bus according to ISO standard 11898-2 into consideration. Alternatively, for example, the use of an Ethernet-based bus system such as IEEE 802.03cg is another example. Bus systems in which the data transmission via optical fibers happens are also usable. Examples are the MOST Bus (Media Oriented System Transport) or the D2B Bus (Domestic Digital Bus). For inbound and outbound wireless communication, the vehicle 10 is equipped with a communication module 160. This communication module 160 is often referred to as an on-board connectivity module OCU as mentioned above. It can be used for mobile communication, e.g. mobile communication according to the LTE standard, according to Long Term Evolution. In general different other types of communication modules are suitable as well.

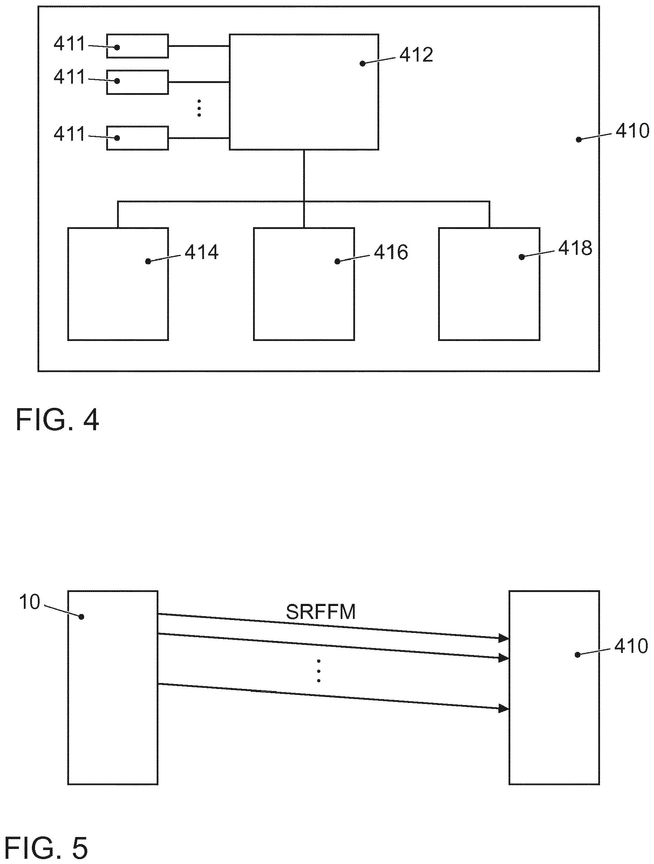

Fig. 4 shows a simplified block diagram of the backend recommender system 410. Reference number 412 denotes a prediction engine. Such prediction engine 412 may be a piece of software or a plurality of pieces of software running on a processing unit. This prediction engine 412 is the "heart" of the backend recommendation system 410, where the decision which sort of service is performed for the user of the vehicle 10 is automatically taken. The recommender's prediction engine 412 predicts how likely it is that the user will accept any new, autonomous actions by the vehicle 10. Such decision will be taken based on a user profile 411 for the user of the vehicle 10. It is noted that the prediction engine 412 may have access to a plurality of user profiles 411 for many different users of a dedicated vehicle manufacturer who wants to offer this enhanced autonomous execution capability.

Also shown in Fig. 4 are three different machine learning algorithms labelled with reference numbers 414, 416, 418. All three may be used for refining the user profile 411 for a certain user. The refinement of the user profile 411 may be made in three phases.

In a first phase the machine learning algorithm 414 sets up a user profile 411 based on the received instructions to perform a service from the user of the vehicle 10. The user may manually enter the texts for the service requests on the touch screen 20 inside the vehicle 10. For this purpose a service management module will be stored in the memory 60. This service management module is a piece of software that supports the execution of services inside the vehicle. This software runs in the computing device 40 and does support all communications with the backend recommender system 410. The machine learning algorithm 414 evaluates the service requests in certain ways, statistically including correlation / similarity, etc. and draws conclusions about the personality of the user. After a plurality of service requests received, an example of the resulting user profile 411 is depicted in Fig. 5. This user profile 411 merely lists to which type of services the user is affine.

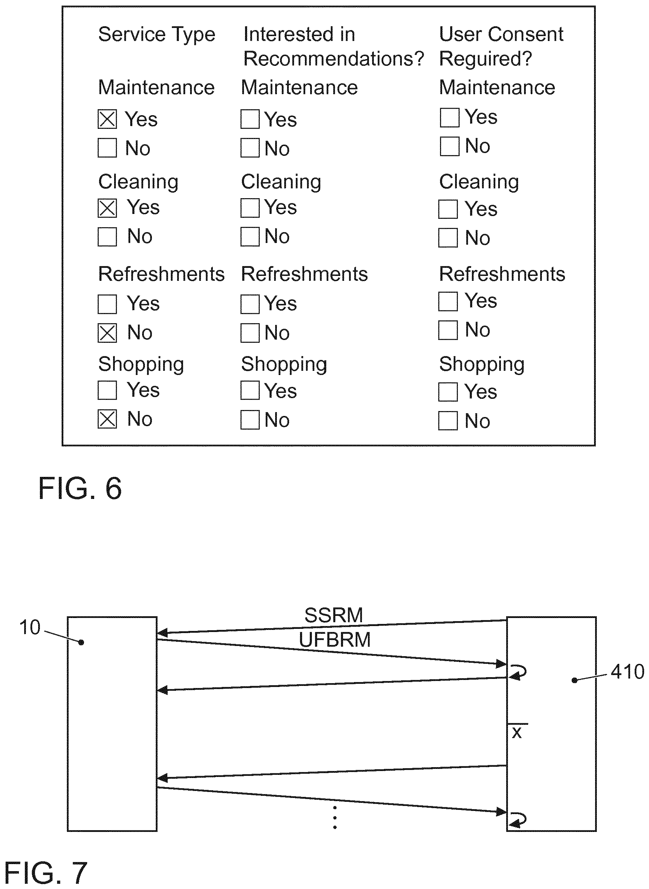

Once the classification of the user has become statistically sound, phase 2 is entered. In the second phase a further machine learning algorithm 416 refines this user profile 411 based on the reactions received from the user for recommended instructions to perform certain services retrieved from the recommendation engine 412 based on the first phase user profile 411. That means in this second phase machine generated service requests and the reaction of the user to them will be primarily evaluated with the machine learning algorithm 416. Given the user's actions of phase 1, and given all other users' actions, the prediction engine in the backend recommender system 410 can now predict how likely it is that the user will accept any new, autonomous actions by the car. Actions with a high likelihood to be accepted can be suggested by the car to the user. Examples include "Bring food if the user needs to work overhours in the office", "Schedule tire change earlier to avoid risk of snow on summer tires", "Perform car wash when there is a special low-price deal in the vicinity". Of course, in a simplified embodiment the user may react with acceptance or refusal of the recommended service request. In an enhanced embodiment the user may react in a further distinguished way with reactions in the form of setting a condition when the recommended service may be accepted or providing a certain level how much the user likes or dislikes the suggested service execution. One example for a condition being set is the price of a service the vehicle will recommend to the user. Another example is time scheduling, i.e. at what day and time a service execution would be accepted. Moreover, also further user generated service requests may be evaluated, too. After a plurality of machine generated service request reactions received, an example of the resulting user profile 411 is depicted in Fig. 6. This user profile 411 now also includes classifications in what sense the user is open to machine generated service request recommendations. The user can either actively react, and thus allow the activity, or stay passive, which means that he implicitly forbids the activity. This information on the user decision is sent back to the recommender system to improve the classification of the user ("online learning").

In a third phase the third machine learning algorithm 416 further refines the user profile 411. This time the machine learning algorithm evaluates the user reactions on service instruction reports the backend recommendation system receives from the user. The user may manually enter the feedback message texts for the service reports on the touch screen 20 inside the vehicle 10. An alternative embodiment is that the user does it on a smart phone, tablet or laptop computer having a connection with the vehicle. In that embodiment even the executed service reports may be directly sent to the smart phone, tablet or laptop computer. The user reactions to the autonomously performed services may be of the same type as in the second phase. An example of the resulting refined user profile 411 is depicted in Fig. 7 after a plurality of executed service reports have been received. This user profile 411 also lists which type of service the user is inclined to accept for autonomous execution by the vehicle 10. It is noted, that in one embodiment phase 3 could only be entered after the user has unlocked entering of this phase, manually.

The prediction engine 412 in the backend recommender system 410 runs algorithms to assess the personality of users through the accepted and declined recommendations based on the previously accepted and declined service. The past behavior of the user is out most important for an accurate prediction which kind of service would be accepted to be autonomously performed. In one embodiment, the past behavior is recorded in the form of the user profile 411. In another embodiment, there is no user profiling at all and there is just a data base in which all accepted or declined services are recorded. The advantage of the use of user profiles is that it contains different personality classifications. The prediction engine 412 can work with them and does not need to perform this classification each time anew when it wants to present a recommendation to the user.

The techniques for user profiling and for the recommendation engine are known in principle. It is necessary to possess information describing each item, and some sort of user profile describing what the user likes is also desirable. The task is to learn the user preferences, and then locate or recommend items that are "similar" to the user preferences. This is similar to what is done in social networks when classifying users in what sort of news, products or services should be brought up to the user's attention according to his interests.
Examples of algorithms, which could be used for that purpose, are:
- multi-dimensional clustering
- online learning
- statistical clustering (correlation / similarity)
- collaborative filtering
- content-based filtering.

For creating a sophisticated user profile, a recommender system mostly focuses on two types of information:
1. A model of the user's preferences.
2. A history of the user's interaction with the recommender system.

Further details for the recommendation engine techniques are found in a Research Paper of Vrije Universiteit Amsterdam titled "Recommendation System for Netflix" of Leidy Esperanza Molina Ferndandez dated Jan. 29, 2018. It is expressively referred to this document also for the purpose of the disclosure of the proposal.

The user profiling in three phases as described above might be very time consuming. Therefore, to avoid the loss of this user profiling information when the user may want to buy a new car, it is advantageous that such user profile is kept in the data base of the backend recommender system 410 and will be linked with the new car. This allows for an immediate profit from the trained social skills of the old car (avoidance of a cold-start problem).

Further, this concept may be extended for other mobility objects such as bicycles, motorcycles, and drones. Therefore, the inventors propose to create "recommender system gateways" to build a "network of hybrid social (mobile) machines" to allow for the communication between cars of different brands as well as with other mobility machines.

Having a social network of mobile machines allows for the extension of recommendations and actions of cars and mobile machines. Assuming that a car may use other machines for their own actions, the degree of cars intelligence would increase. Hence, business models based on "recommendations", "like" and "follow" (similar to Facebook and Twitter) can be developed, e.g. advertisement offers based on the number of recommendations and "likes" and "follow". Other examples, which make massive use of user profiling and recommendation systems are Amazon, Netflix, YouTube, Spotify, etc.

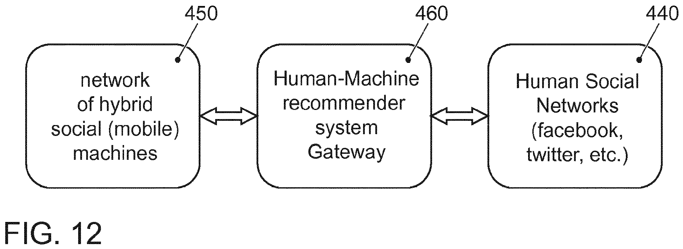

Another extension is proposed in a concept to connect the "network of hybrid social (mobile) machines" to at least one human social network like Facebook and Twitter. For that purpose, suitable "Human Machine Recommender System Gateways" are required to connect the different networks to each other. Fig. 12 shows this concept. With reference number 450 a network of hybrid social machines is labelled. In the easiest form this network would be exemplified with just one backend recommender system 410. Reference number 440 marks a plurality of human social networks. In the easiest form this network would be exemplified with just one human social network or a backend recommender system of such human social network. User profile information would be exchanged via said "Human Machine Recommender System Gateway" 460. Thus the user profile 411 for the backend recommender system 410 could be further refined based on the user profile information received via the "Human Machine Recommender System Gateways" 460.

Connecting both social networks together allow for the extension of number of "populations", which can participate to the "recommendation, like and follow" model. Furthermore, new business models can be developed, e.g. new valuation (price) model of social machines (cars) according to their degree of intelligence. The degree of intelligence may be measured according to the following criteria:
- Satisfaction of the human users
- Achieved revenue of social machines (cars) per year based on the "recommendation, like and follow" model.
- Ability to cooperate with different types of social machines
- The classes of actions done by the social machine (car)
- The technical state of the social machine (car)

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to and executed by a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described here. There is scope for many different adaptations and developments, which are also considered to belong to the disclosure.

### Reference Sign List

- 10: Vehicle
- 20: Touch Screen
- 40: Computing Device
- 50: Input Unit
- 60: Memory Unit
- 70: Data Line to Display Unit
- 80: Data Line to Memory Unit
- 90: Data Line to Operation Element Unit
- 100: Data Bus
- 110: Multifunction Display
- 120: Telephone
- 130: Navigation System
- 140: Radio
- 150: Camera
- 160: On-Board Connectivity Unit
- 200: Base Station
- 300: Evolved Packet Core
- 400: Internet
- 410: Backend Recommender System A
- 420: Backend Recommender System B
- 430: Recommender System Gateway
- 440: Human Social Network Recommender System
- 450: Network of Hybrid Social Machines
- 460: Human Machine Recommender System Gateway

## Claims

1. Method for automatically performing services for a user, comprising the steps of receiving in an autonomous mobile device of a user an instruction to perform a specified service from a backend recommender system (410), said autonomous mobile user device (10) carrying out the specified service without explicit user consent, reporting the execution of said specified service to the user, receiving feedback from the user to the execution of the service, reporting said user feedback to the backend recommender system (410), applying a machine learning algorithm at the backend recommender system (410) to improve the recommendation accuracy.

2. Method according to claim 1, wherein the backend recommender system (410) is trained beforehand in a first phase, in which the user instructions for performing a service are recorded at the backend recommender system (410) after which a step of user classification is performed in which the user is being classified to be affine to a certain type of service.

3. Method according to claim 2, wherein the backend recommender system (410) is trained beforehand in a second phase, in which the backend recommender system (410) generates instructions for performing a service based on the classification of the user from the first phase, asks for approval by said user and wherein the user's reaction to the question will be used in a further step of user classification.

4. Method according to one of the previous claims, wherein the improvement of the recommendation accuracy involves the classification of the user to be affine to a certain type of service without explicit user consent.

5. Method according to one of the claims 2 to 4, wherein the user classification is recorded in a user profile (411) in the backend recommender system (410).

6. Method according to one of the previous claims, wherein the certain type of service is at least one of a maintenance service, cleaning service, a refreshment service or a shopping service.

7. Method according to one of the previous claims, wherein the device of the user is a vehicle and the maintenance service corresponds to the maintenance of said vehicle.

8. Autonomous mobile user device adapted for the use in the method according to one of the previous claims.

9. Autonomous mobile user device according to claim 8, wherein the autonomous mobile device is a vehicle (10), which is equipped with an on-board connectivity unit (160) providing communication capability to said vehicle (10), wherein said vehicle (10) is further equipped with a service management module supporting the automatically performing of a service for the user of said vehicle (10), wherein said service management module in phase one of said training phase forwards a request to perform a service specified from the user of said vehicle to said on-board connectivity unit (160) which then transmits a corresponding service request feed forward message (SRFFM) towards the backend recommender system (410).

10. Vehicle according to claim 9, wherein said service management module via said on-board connectivity unit (160) in phase two of the training phase receives one or more suggested service request message (SSRM) from the backend recommender system (410), informs the user about the requested service, receives a feedback from the user and generates a first type of a user feedback reporting message (UFBRM), which is forwarded to said on-board connectivity unit (160), which then transmits said user feedback reporting message (UFBRM) towards the backend recommender system (410).

11. Vehicle according to claim 9 or 10, wherein said service management module via said on-board connectivity unit (160) in phase three of the training phase receives one or more messages containing a suggested service request from the backend recommender system (410), informs the user about the service once it has been performed, receives a feedback from the user and generates a second type of a user feedback reporting message (UFBRM), which is forwarded to said on-board connectivity unit (160), which then transmits said user feedback reporting message (UFBRM) towards the backend recommender system (410).

12. Backend recommender system (410) adapted for the use in the method according to one of the claims 1 to 7.

13. Backend recommender system (410) according to claim 12, comprising communication means for receiving a plurality of service request feed forward messages (SRFFM) in said first training phase and comprising a service recommendation engine which runs a machine learning algorithm which trains the service recommendation engine in said first training phase based on said plurality of service request feed forward messages (SRFFM).

14. Backend recommender system (410) according to claim 12 or 13, wherein said service recommendation engine generates one or more suggested service request message (SSRM) once the service recommendation engine has been trained, transmits the service request message towards the user device, receives back one or more user feedback reporting message (UFBRM) and wherein said recommendation engine runs said machine learning algorithm again to train the service recommendation engine in said second phase based on the received one or more user feedback reporting message (UFBRM).
